# FASCICULE DE BREVET EUROPEEN

(11) **EP 1 545 948 B1**
(45) Date de publication et mention de la délivrance du brevet: **28.11.2007**
(21) Numéro de dépôt: 03797351.8
(22) Date de dépôt: 19.09.2003
(51) Int. Cl.: B60T 7/06

(54) **DISPOSITIF DE MONTAGE D UNE PEDALE POUR VEHICULE AUTOMOBILE**
PEDALMONTIERVORRICHTUNG FÜR EIN KRAFTFAHRZEUG
PEDAL MOUNTING DEVICE FOR A MOTOR VEHICLE

(30) Priorité: 19.09.2002 FR 0211632
(43) Date de publication de la demande: 29.06.2005
(73) Titulaire: RENAULT S.A.S., 92100 Boulogne Billancourt (FR)
(72) Inventeur: BOURGET, Benoît, F-78180 Montigny Le Bretonneux (FR); TIXIER, Philippe, F-78280 Guyancourt (FR); DESLANDES, Max, F-78690 Les Essarts le Roi (FR)
(86) Numéro de dépôt international: PCT/FR2003/002760
(87) Numéro de publication internationale: WO 2004/026650

(56) Documents cités:
- EP-A- 1 074 445
- FR-A- 2 819 758
- US-A- 5 246 084
- US-B1- 6 354 171

## Description

L'invention concerne un dispositif de montage d'une pédale pour véhicule automobile pouvant être désolidarisée en cas de choc.

L'invention concerne plus particulièrement un dispositif de montage d'une pédale de frein reliée à des moyens de renvoi de mouvement et d'effort vers un ensemble d'actionnement des freins du véhicule.

Les dispositifs de montage de pédale de frein reliés à des moyens de renvoi sont utilisés notamment dans les véhicules à direction à droite. En effet, qu'ils aient une direction à gauche ou à droite, des véhicules peuvent avoir des équipements communs situés aux mêmes emplacements. Cependant, il peut être nécessaire, pour les véhicules à direction à droite, de déplacer certaines fonctions, notamment de commande, ou de les adapter à partir de celles utilisées dans les véhicules à direction à gauche.

Cependant, lorsque la proportion de véhicules à direction à droite reste limitée, il est impossible d'inverser toutes les fonctions du véhicule, le déplacement de certaines fonctions risquant de présenter un coût trop élevé.

Il est donc nécessaire, dans un véhicule à direction à droite, de garder le maximum d'éléments aux mêmes emplacements que dans un véhicule à direction à gauche.

Par exemple, dans le cas de la fonction de freinage, le pédalier est déplacé et se trouve au niveau du poste de conduite, c'est-à-dire à droite dans un véhicule à direction à droite, tandis que le système d'amplification de freinage reste à gauche afin de limiter les modifications nécessaires. Un système de renvoi entre la pédale de frein et l'amplificateur de freinage permet alors de transmettre le mouvement de la pédale.

Cependant, en cas de choc frontal, le tablier sur lequel est monté le pédalier, ainsi le plus souvent que l'amplificateur de freinage et le système de renvoi, recule vers l'intérieur de l'habitacle. Il n'est alors pas possible de prévoir la manière dans cette situation dont le système de renvoi peut se comporter, soit faire "monter" la pédale de frein, soit la faire "baisser".

C'est, par exemple, le type de pédale qui est décrit dans la publication US-A-5246084. Cette invention concerne en effet une pédale de frein pour véhicule à direction à droite située à droite du poste de conduite, le mouvement de la pédale étant transmis à l'amplificateur de freinage par l'intermédiaire d'un système de renvoi comportant une barre et des bielles. II n'est pas prévu de système de désolidarisation de la pédale dans ce dispositif.

La libération de la pédale de frein en cas de choc est pourtant une fonction importante car elle empêche la pédale de blesser la cheville du conducteur au moment où le tablier recule vers l'intérieur de l'habitacle.

On connaît par ailleurs par la publication EP-A-1074445 un dispositif de montage de frein pour véhicule automobile à direction à gauche dans lequel la pédale de frein est reliée à un système de renvoi vers l'amplificateur de freinage.

Le corps de la pédale est monté à rotation autour d'un axe transversal, tandis que l'extrémité supérieure de la pédale est reliée au système de renvoi par l'intermédiaire de deux bielles reliées entre elles par un élément de liaison tel qu'un axe transversal d'articulation. En cas de choc, une des bielles est percutée par un élément de structure du véhicule, qui provoque la rupture de la liaison articulée entre les deux bielles. Ce dispositif permet donc de désolidariser la pédale du système de renvoi, mais il n'est pas simple à mettre en application car il nécessite une forme particulière de l'élément de structure. De plus, il ne permet pas de rabattre la pédale vers l'avant du véhicule, avec le patin d'actionnement qui "descend" vers le tablier.

Afin de pallier ces inconvénients, l'invention a pour objet un dispositif de montage d'une pédale de frein, dans lequel la pédale est reliée par l'intermédiaire d'un système de renvoi et dans lequel la pédale peut être dissociée du système de renvoi en cas de choc.

L'invention a également pour objet, un dispositif de montage d'une pédale de frein dans lequel la pédale, une fois désolidarisée du système de renvoi, est poussée vers l'avant du véhicule en éloignement de l'extrémité inférieure de la jambe du conducteur.

Dans le but de résoudre ces problèmes, l'invention propose un dispositif de montage d'une pédale pour véhicule automobile, dans lequel la pédale est montée à rotation autour d'un axe de pédale fixe, porté par un tablier et orienté selon un axe transversal du véhicule, et est reliée à une bielle, la bielle coopérant, par l'intermédiaire d'un élément de transmission, avec des moyens de renvoi de l'effort appliqué à la pédale vers un organe du véhicule, et dans lequel, en cas de choc, le mouvement relatif vers l'avant d'un élément de structure du véhicule entraîne une désolidarisation entre la pédale et la bielle, caractérisé en ce que le dispositif de montage comporte un basculeur, monté à rotation autour de l'axe de pédale, qui, lorsqu'il est heurté par l'élément de structure, pivote autour de l'axe de pédale depuis une position initiale au moins jusqu'à une position intermédiaire dans laquelle il exerce un effort sur la bielle de façon à rompre la liaison entre la pédale et la bielle.

Selon une autre caractéristique de l'invention, le basculeur, sous l'action de l'élément de structure, est susceptible de pivoter, au-delà de sa position intermédiaire, vers une position finale pour exercer, par l'intermédiaire de la bielle, un effort de poussée sur la pédale de façon à rabattre vers l'avant du véhicule l'extrémité libre d'actionnement de la pédale, par rotation de cette dernière autour de son axe.

Selon une autre caractéristique de l'invention, une extrémité supérieure de la pédale est montée à rotation autour de l'axe de pédale, une extrémité supérieure du basculeur constitue une face d'appui pour l'élément de structure et une extrémité inférieure du basculeur est apte à coopérer avec la bielle dont une extrémité est reliée à l'élément de transmission par l'intermédiaire d'un axe transversal, le point de liaison entre la bielle et la pédale étant situé sous l'axe de pédale.

Selon une autre caractéristique de l'invention, une extrémité supérieure libre de la bielle est susceptible de coopérer avec une extrémité supérieure de la pédale pour la rabattre vers l'avant.

Selon une autre caractéristique de l'invention, le basculeur comporte un doigt transversal apte à exercer un effort sur un bord avant de la bielle.

D'autres caractéristiques et avantages de l'invention apparaîtront à la lecture de la description d'exemples de réalisation d'un dispositif de montage d'une pédale de frein aux dessins annexés dans lesquels :
- La figure 1 est une vue en perspective d'un dispositif de montage de pédale de frein selon l'invention reliée par des moyens de renvoi à un amplificateur de freinage.
- La figure 2 est une vue schématique latérale du dispositif de montage de pédale en position initiale avant un choc.
- La figure 3 est une vue en coupe selon la ligne 3-3 du dispositif de la figure 1.
- La figure 4 est une vue du dispositif de la figure 2 dans une position initiale avant le choc (figure A), dans une deuxième position en début de choc (figure B), dans une troisième position pendant te choc (figure C) et dans une position finale à la fin du choc (figure D).

Dans la description qui suit, nous prendrons comme axes de référence l'axe T correspondant à l'axe transversal du véhicule, l'axe L correspondant à l'axe longitudinal du véhicule et l'axe V correspondant à l'axe vertical.

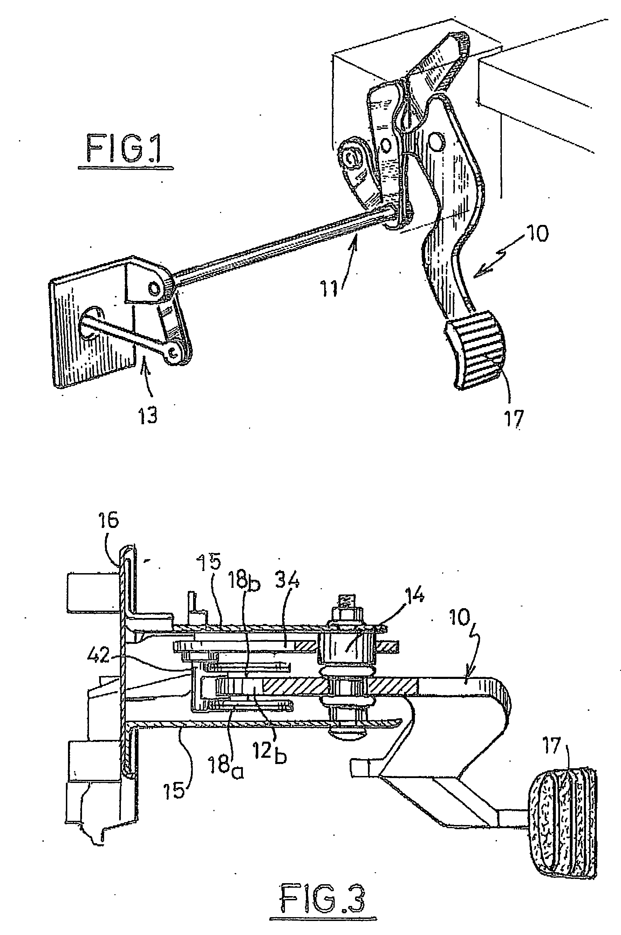

Tel que représenté à la figure 1, un dispositif de montage de pédale 10 munie d'un patin 17 est relié par des moyens de renvoi 11 à un amplificateur de freinage 13 qui est décalé transversalement vers la gauche par rapport au plan vertical dans lequel pivote la pédale 10. Le système de renvoi permet de transmettre à l'amplificateur de freinage 13 le mouvement de la pédale de frein 10 résultant de l'effort appliqué par le conducteur sur le patin inférieur 17.

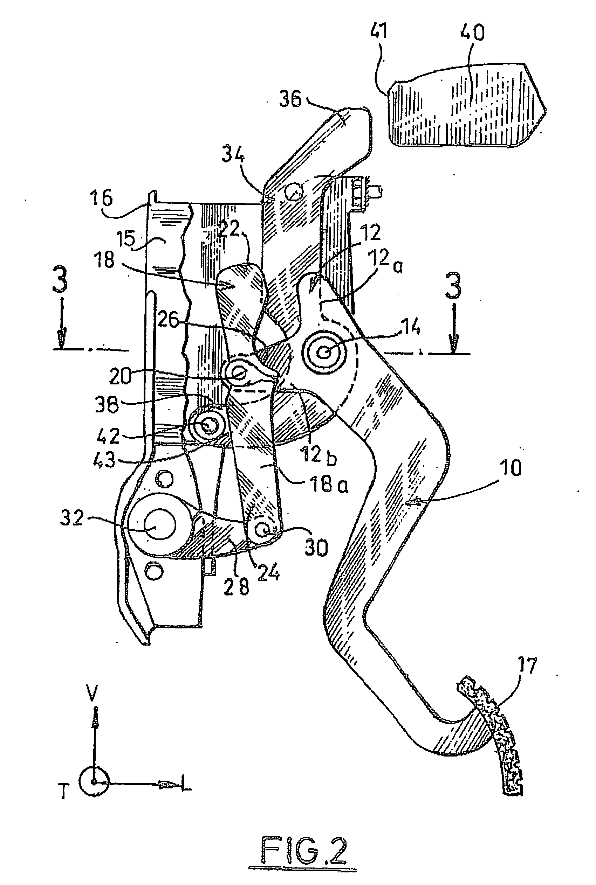

Tel que représenté à la figure 2, une extrémité supérieure 12 de la pédale de frein 10 est montée à rotation autour d'un axe de pédale 14 orienté selon l'axe T et qui est maintenu à ses extrémités par deux flasques verticaux longitudinaux 15 qui sont montés sur le tablier transversal 16.

Au-delà de l'axe 14, l'extrémité supérieure 12 de la pédale se divise en deux branches en V, une branche supérieure 12a d'orientation globalement verticale et une branche inférieure 12b sensiblement horizontale qui s'étend vers l'avant.

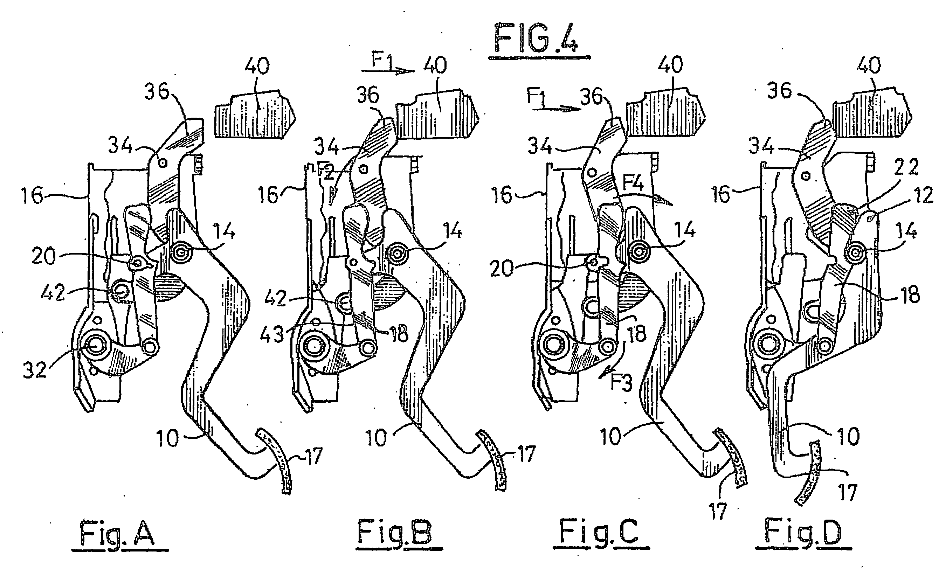

Tel que représenté à la figure 3, une bielle 18 est formée de deux bras symétriques sensiblement verticaux 18a et 18b situés de part et d'autre de la pédale 10. Les extrémités des bras 18a et 18b se rejoignent pour former les extrémités supérieure 22 et inférieure 24 de la bielle 18.

Tel que représenté à la figure 2, l'extrémité supérieure 22 de la bielle 18 se trouve en vis-à-vis de la branche supérieure 12a de la pédale 10 sensiblement dans le plan de cette dernière. La bielle 18 comporte aussi une échancrure 26 se trouvant sensiblement en vis à vis de l'axe de pédale 14.

La branche 12b de la pédale 10 est reliée à la bielle 18 par l'intermédiaire de moyens de liaison 20 susceptibles de permettre une dissociation entre la pédale 10 et le système de renvoi 11. Cette liaison 20 peut notamment être un verrou apte à se rompre ou à s'ouvrir sous l'effet d'un effort mécanique.

L'extrémité inférieure 24 de la bielle 18 est reliée à un maneton de transmission 28 par l'intermédiaire d'un axe transversal d'articulation 30.

Le maneton de transmission 28 est lié en rotation à un arbre transversal 32 du système de renvoi 11. La bielle 18 et le maneton de transmission 28 permettent de transmettre au système de renvoi le mouvement de la pédale 10.

Lorsque la pédale de frein 10 est enfoncée, elle pivote autour de son axe 14 selon le sens horaire. Comme l'extrémité libre de la branche 12a de la pédale de frein est reliée par l'élément de liaison 20 à la bielle 18, cette dernière déplace globalement verticalement vers le haut. Son extrémité inférieure 24, qui est reliée à l'élément de transmission 28, monte et fait pivoter le maneton de transmission 28 et l'arbre 32 dans le sens anti-horaire, en actionnant ainsi les moyens de renvoi 11.

La partie centrale du basculeur 34, comportant une extrémité supérieure 36 et une extrémité inférieure 38, est montée à rotation autour de l'axe de pédale 14. L'extrémité supérieure 36 du basculeur 34 se trouve en vis-à-vis d'une face transversale avant 41 d'un élément de structure 40 du véhicule, tel que par exemple une traverse.

L'extrémité inférieure 38 du basculeur 34 est recourbée vers l'avant et elle porte un doigt 42, qui s'étend transversalement en vis-à-vis d'une portion 43 du bord avant de la bielle 18.

A l'état neuf, c'est-à-dire avant un accident occasionnant un choc frontal, le basculeur 34 est maintenu par des moyens non représentés, dans sa position angulaire représentée à la figure 2 dans laquelle il existe un jeu entre le doigt 42 et la portion 43 du bord avant de la bielle 18.

Tel que représenté à la figure 4, dans la position de la figure B, un choc dont la direction est indiquée par la flèche F1 orientée selon l'axe L provoque le recul du tablier 16 et du pédalier qu'il supporte vers l'arrière, à l'intérieur de l'habitacle du véhicule. Il se produit donc un mouvement relatif de l'arrière vers l'avant de l'élément de structure 40 par rapport au pédalier, et donc par rapport à l'extrémité supérieure 36 du basculeur 34.

L'extrémité 36 du basculeur 34 est donc percutée par l'élément de structure 40,41.

Le choc occasionné provoque une rotation du basculeur 34 autour de l'axe de pédale 14 dans le sens anti-horaire, selon la direction indiquée par la flèche F2.

Le doigt 42 du basculeur 34 entre alors en contact avec le bord avant 43 de la bielle 18. L'effort ainsi exercé sur la bielle 18 provoque alors la rupture ou l'ouverture de la liaison 20, en désaccouplant ainsi la pédale de frein 10 et la bielle 18.

La pédale est alors "libre" de pivoter autour de son axe.

Tel que représenté à la figure 4, dans la position de la figure C, l'élément de structure 40 continue à avancer, la bielle 18 étant désolidarisée de la pédale 10.

L'élément de structure 40 continue à exercer un effort sur l'extrémité 36 du basculeur 34. Le basculeur 34 continue donc à tourner dans le sens anti-horaire, selon le sens donné par la flèche F2. Le doigt percuteur 42 poursuit ainsi sa poussée sur la bielle 18 qui pivote alors autour de l'axe dans le sens horaire, selon la direction indiquée par la flèche F3.

L'extrémité supérieure 22 de la bielle 18 entre alors en contact avec la branche supérieure 12a de la pédale 10. Sous l'action de la bielle 18, la pédale 10 pivote autour de l'axe de pédale 14 dans le sens horaire, selon la direction indiquée par la flèche F4.

Tel que représenté à la figure 4, dans la position de la figure D, l'élément de structure 40 avance encore. Il continue donc à exercer un effort sur le basculeur 34. Le doigt 42 continue à pousser la bielle 18 dont la partie supérieure 22 poursuit sa poussée sur la branche 12a de la pédale 10 de façon que la pédale 10 soit rabattue contre le tablier 16.

L'invention en objet présente donc l'avantage, en rabattant la pédale de frein vers le bas, de prévenir les risques de lésions physiologiques pour le conducteur, en particulier d'éviter lui blesser la cheville en cas d'accident.

La présente invention n'est nullement limitée au mode de réalisation décrit qui n'a été donné qu'à titre d'exemple. L'invention peut également concerner une pédale commandant un organe autre qu'un amplificateur de freinage. En particulier, ce type de dispositif de montage peut aussi s'appliquer à une pédale d'embrayage reliée par des moyens de renvois à un mécanisme d'embrayage.

## Revendications

1. Dispositif de montage d'une pédale (10) pour véhicule automobile, dans lequel la pédale (10) est montée à rotation autour d'un axe de pédale fixe (14), porté par un tablier (16) et orienté selon un axe transversal du véhicule, et est reliée à une bielle (18), la bielle (18) coopérant, par l'intermédiaire d'un élément de transmission (28), avec des moyens de renvoi de l'effort appliqué à la pédale (10) vers un organe du véhicule, et dans lequel, en cas de choc, le mouvement relatif vers l'avant d'un élément de structure (40) du véhicule entraîne une désolidarisation entre la pédale (10) et la bielle (18), **caractérisé en ce que** le dispositif de montage comporte un basculeur (34), monté à rotation autour de l'axe de pédale (14), qui, lorsqu'il est heurté par l'élément de structure (40), pivote autour de l'axe de pédale (14) depuis une position initiale au moins jusqu'à une position intermédiaire dans laquelle il exerce un effort sur la bielle (18) de façon à rompre la liaison entre la pédale (10) et la bielle (18).

2. Dispositif de montage d'une pédale (10) selon la revendication 1, **caractérisé en ce que** le basculeur (34) , sous l'action de l'élément de structure (40), est susceptible de pivoter, au-delà de sa position intermédiaire, vers une position finale pour exercer, par l'intermédiaire de la bielle (18), un effort de poussée sur la pédale (10) de façon à rabattre vers l'avant du véhicule l'extrémité libre d'actionnement de la pédale (10), par rotation de cette dernière autour de son axe (14).

3. Dispositif de montage d'une pédale (10) selon l'une quelconque des revendications précédentes, **caractérisé en ce qu'**une extrémité supérieure (12) de la pédale (10) est montée à rotation autour de l'axe de pédale (14), une extrémité supérieure (36) du basculeur (34) constitue une face d'appui pour l'élément de structure (40) et une extrémité inférieure (38) du basculeur (34) est apte à coopérer avec la bielle (18) dont une extrémité (24) est reliée à l'élément de transmission (28) par l'intermédiaire d'un axe transversal (30), le point de liaison (20) entre la bielle (18) et la pédale (10) étant situé sous l'axe de pédale (14).

4. Dispositif de montage d'une pédale (10) selon l'une quelconque des revendications précédentes, **caractérisé en ce qu'**une extrémité supérieure libre (22) de la bielle (18) est susceptible de coopérer avec une extrémité supérieure (12) de la pédale (10) pour la rabattre vers l'avant.

5. Dispositif de montage d'une pédale (10) selon l'une quelconque des revendications précédentes, **caractérisé en ce que** le basculeur (34) comporte un doigt transversal (42) apte à exercer un effort sur un bord avant de la bielle (18).

## Claims

1. Device for mounting a pedal (10) for a motor vehicle, in which device the pedal (10) is mounted to rotate about a fixed pedal pivot pin (14) borne by a bulkhead (16) and directed along a transverse axis of the vehicle and is connected to a link rod (18), the link rod (18) collaborating, via a transmission element (28), with means for transferring the force applied to the pedal (10) to a component of the vehicle, and in which device, in the event of an impact, the relative forward movement of a structural element (40) of the vehicle causes the pedal (10) and the link rod (18) to become disconnected, **characterized in that** the mounting device comprises a rocker (34) mounted to rotate about the pedal pivot pin (14) and which, when struck by the structural element (40), pivots about the pedal pivot pin (14) from an initial position at least as far as an intermediate position in which it exerts a force on the link rod (18) so as to break the connection between the pedal (10) and the link rod (18).

2. Device for mounting a pedal (10) according to Claim 1, **characterized in that**, under the action of the structural element (40) the rocker (34) can pivot beyond its intermediate position towards a final position in order, via the link rod (18), to exert a thrusting force on the pedal (10) so as to force the actuating free end of the pedal (10) towards the front of the vehicle by rotating this pedal about its pivot pin (14).

3. Device for mounting a pedal (10) according to either one of the preceding claims, **characterized in that** an upper end (12) of the pedal (10) is mounted to rotate about the pedal pivot pin (14), an upper end (36) of the rocker (34) constitutes a bearing face for the structural element (40) and a lower end (38) of the rocker (34) is able to collaborate with the link rod (18) one end (24) of which is connected to the transmission element (28) via a transverse pivot pin (30), the point of connection (20) between the link rod (18) and the pedal (10) lying below the pedal pivot pin (14).

4. Device for mounting a pedal (10) according to any one of the preceding claims, **characterized in that** a free upper end (22) of the link rod (18) is able to collaborate with an upper end (12) of the pedal (10) in order to force it forwards.

5. Device for mounting a pedal (10) according to any one of the preceding claims, **characterized in that** the rocker (34) comprises a transverse finger (42) able to exert a force on a front edge of the link rod (18).

## Patentansprüche

1. Vorrichtung zum Montieren eines Pedals (10) für ein Kraftfahrzeug, bei der das Pedal (10) um eine ortsfeste Pedalachse (14) drehbar montiert wird, die von einer Stirnwand (16) getragen wird und gemäß einer Querachse des Fahrzeugs ausgerichtet ist, und mit einer Treibstange (18) verbunden ist, wobei die Treibstange (18) mittels eines Übertragungselements (28) mit Mitteln zur Übertragung der auf das Pedal (10) ausgeübten Kraft zu einem Organ des Fahrzeugs zusammenwirkt, und bei der im Fall eines Aufpralls die relative Bewegung eines Strukturelements (40) des Fahrzeugs nach vorne zu einem Lösen des Pedals (10) und der Treibstange (18) voneinander führt, **dadurch gekennzeichnet, dass** die Montagevorrichtung einen um die Pedalachse (14) drehbar montierten Kipphebel (34) aufweist, der, wenn das Strukturelement (40) auf ihn trifft, von einer Anfangsstellung bis in mindestens eine Zwischenstellung um die Pedalachse (14) schwenkt, in der er eine Kraft auf die Treibstange (18) ausübt, um die Verbindung zwischen dem Pedal (10) und der Treibstange (18) zu unterbrechen.

2. Vorrichtung zur Montage eines Pedals (10) nach Anspruch 1, **dadurch gekennzeichnet, dass** der Kipphebel (34) unter der Wirkung des Strukturelements (40) über seine Zwischenstellung hinaus in eine Endstellung schwenken kann, um über die Treibstange (18) eine Schubkraft auf das Pedal (10) auszuüben, um das freie Betätigungsende des Pedals (10) durch Drehen dieses letzteren um seine Achse (14) zur Vorderseite des Fahrzeugs herunterzudrücken.

3. Vorrichtung zur Montage eines Pedals (10) nach einem der vorhergehenden Ansprüche, **dadurch gekennzeichnet, dass** ein oberes Ende (12) des Pedals (10) um die Pedalachse (14) drehbar montiert ist, dass ein oberes Ende (36) des Kipphebels (34) eine Auflageseite für das Strukturelement (40) bildet, und dass ein unteres Ende (38) des Kipphebels {34) geeignet ist, um mit der Treibstange (18) zusammenzuwirken, von der ein Ende (24) über eine Querachse (30) mit dem Übertragungselement (28) verbunden ist, wobei der Verbindungspunkt (20) zwischen der Treibstange (18) und dem Pedal (10) sich unter der Pedalachse (14) befindet.

4. Vorrichtung zur Montage eines Pedals (10) nach einem der vorhergehenden Ansprüche, **dadurch gekennzeichnet, dass** ein oberes freies Ende (22) der Treibstange (18) mit einem oberen Ende (12) des Pedals (10) zusammenwirken kann, um es nach vorne herunterzudrücken.

5. Vorrichtung zur Montage eines Pedals (10) nach einem der vorhergehenden Ansprüche, **dadurch gekennzeichnet, dass** der Kipphebel (34) einen Querfinger (42) aufweist, der eine Kraft auf einen vorderen Rand der Treibstange (18) ausüben kann.
